# EUROPEAN PATENT SPECIFICATION

(11) **EP 3 991 325 B1**
(45) Date of publication and mention of the grant of the patent: **30.08.2023**
(21) Application number: 19742346.0
(22) Date of filing: 18.07.2019
(51) Int. Cl.: H04B 10/61, H04B 10/2507, G06N 3/067, G06N 3/08

(54) **PHOTONIC SIGNAL PROCESSING**
PHOTONISCHE SIGNALVERARBEITUNG
TRAITEMENT DE SIGNAL PHOTONIQUE

(43) Date of publication of application: 04.05.2022
(73) Proprietor: Huawei Technologies Co., Ltd., Longgang District Shenzhen, Guangdong 518129 (CN)
(72) Inventor: SUN, Xu, Guangdong 518129 (CN); SUO, Jing, Guangdong 518129 (CN); SONG, Xiaolu, Guangdong 518129 (CN); LE, Nguyen Binh, Guangdong 518129 (CN)
(74) Representative: Epping - Hermann - Fischer
(86) International application number: PCT/EP2019/069309
(87) International publication number: WO 2021/008705

(56) References cited:
- EP-A1- 3 465 302
- US-A1- 2019 065 941
- US-A1- 2019 109 736
- GUESMI LATIFA ET AL: "Automatic modulation format recognition for the next generation optical communication networks using artificial neural networks", PROCEEDINGS OF SPIE/ IS & T,, vol. 9357, 16 March 2015 (2015-03-16), pages 93571I-93571I, XP060049969, DOI: 10.1117/12.2078422 ISBN: 978-1-62841-730-2
- JUNSEN LAI ET AL: "Multiple-impairment monitoring for 40-Gbps RZ-OOK using artificial neural networks trained with reconstructed eye diagram parameters", QUANTUM ELECTRONICS CONFERENCE&LASERS AND ELECTRO-OPTICS (CLEO/IQEC/PACIFIC RIM), 2011, IEEE, 28 August 2011 (2011-08-28), pages 563-565, XP032175188, DOI: 10.1109/IQEC-CLEO.2011.6193685 ISBN: 978-1-4577-1939-4
- Yichen Shen ET AL: "Deep learning with coherent nanophotonic circuits", Nature Photonics, 1 July 2017 (2017-07-01), pages 441-446, XP055618610, DOI: 10.1038/nphoton.2017.93 Retrieved from the Internet: URL:https://arxiv.org/pdf/1610.02365.pdf [retrieved on 2019-09-04]

## Description

### TECHNICAL FIELD

The present invention relates to the field of optical communications technologies, and specifically, to processing optical signals.

### BACKGROUND

The present disclosure, in some embodiments thereof, relates to optical communication and, more specifically, but not exclusively, to processing optical signals.

Optical signals are transmitted over optical guided media under at a very high rate, typically higher than 100 Giga-Bauds, GBauds, and often using high order modulation resulting in an integrated bit rate to the order of terabits per second over one wavelength carrier. The optical signal are also distorted and attenuated after transmission through the optical guided medium.

Recovering data carried at such a high rate and with high order modulation requires a large amount of processing. Currently, optical signals are converted to the electronic digital domain and then processed by a digital signal processor (DSP). However the operational speed and electronic sampling rate required for DSP processing are difficult to attain and have high power consumption. Current DSP processing is limited to 200 Giga-Samples per second, with a bandwidth limited to around 35-40 GHz and power consumption greater than 20 Watts.

Transmission and connections in data centers (e.g. intra-connection or data-center networking-DCN) and inter-data-center interconnection require ultra-high capacity links and ultra-fast processing. Such systems may operate, for example, at a speed of 100 GBauds or with a bit rate possibly reaching 400 Giga-bits/second for Pulse Amplitude Modulation of order 8 or even higher PAM-8 using intensity modulation and direct detection or quadrature amplitude modulation (QAM) signals using coherent transmission and reception techniques.

DSPs do not offer high quality processing for optical telecommunication links with intensity modulation and direct detection systems. Therefore current DSP-based processing place significant constraints on ultra-high capacity networks.

Yichen Shen et al: "Deep learning with cohererent nanaphotonic circuits", Nature Photonics, 1 July 2017, pages 441-446, XP055618610) describes an artificial neural network, which consists of a set of input artificial neurons connected to at least one hidden layer and an output layer.

In particular an Optical Neural Network, ONN, architecture is described, where signals are encoded in the amplitude of optical pulses propagating in integrated photonic waveguides where they pass through an optical interference unit, OIU, and finally an optical nonlinearity unit, ONU. Optical matrix multiplication is implemented with an OIU and nonlinear activation is realized with an ONU. To realize an OIU that can implement any real-valued matrix, a singular value decomposition SVD is used. It is further described that it was theoretically shown that any unitary transformations can be implemented with optical beamsplitters and phase shifters. In an experiment a two layer, fully connected neural network was implemented with the OIU. The coherent ONN is realized with a programmable nanophotonic processor composed of an array of 56 Mach-Zehnder interferometers and 213 phase shifting elements. Each interferometer is composed of two evanescent-mode waveguide couplers sandwiching an internal thermo-optic phase shifter to control the splitting ratio of the output modes, followed by a second modulator to control the relative phase of the output modes.

EP 3 465 302 A1 (WO 2017/210550 A1) describes the use of optical neural networks as implementation of artificial neural networks.

US2019/109736 A1, Junser Lai et al (XP032175188), US 2019/065941 A1 and Gusemi Latifa et al (XP060049969) all describe the use of non-optical artificial neural networks for processing an optical signal after optical to electical conversion.

### SUMMARY

It is an object of the present disclosure to provide an apparatus, a system, a computer program product and a method for performing signal processing in the optical domain.

In some embodiments of the disclosure, optical signals are sampled by an optical sampler. The optical samples are processed by an optical neural network (ONN) which includes layers of optical neurons. The ONN passes the optical samples from layer to layer whose interconnections are weighted with attenuation/gain coefficient variable optical paths via optical phase shifters. Feedback and control of the ONN is performed by controlling the phase shifters (that is by modifying the weighting coefficients of the interconnections between layers of the ONN) via which the optical samples travel, so that optical convergence is achieved. Optical logic decision circuitry detects the logic states of the optical signals exiting the ONN.

During a training phase, the ONN is trained to obtain convergence of the parallel optical samples to desired trained states. The training achieves the degree of the weighting coefficients of the interconnections between the ONN layers so as to reach convergence to a targeted objective. The training phase is performed prior to the processing in real time.

Optionally, the same ONN may be reconfigured for different processing functions in the photonic domain by controlling the phase shifters differently for each function, as described in more detail below.

Processing the signals in the optical domain provides the benefit of handling the ultra-high data rate signals used during optical transmission in a simple and effective manner.

The foregoing and other objects are achieved by the features of the independent claims. Further implementation forms are apparent from the dependent claims, the description and the figures.

According to a first aspect of some embodiments of the present disclosure there is provided an apparatus for optical processing of a signal. The apparatus includes an optical sampler, an optical neural network and a phase shift controller. The optical sampler obtains parallel optical samples by sampling a continuous optical signal. The optical neural network optically processes the parallel optical samples and provides a final output optical signal resulting from the processing. The optical neural network includes interconnected optical neurons. Each of the optical neurons inputs multiple optical signals and outputs an optical signal which is a weighted sum of the input optical signals. The weightings are established by phase-shifting the input optical signals prior to the summation. The phase shift controller controls the phase-shifting so as to obtain required weightings for the input optical signals. Processing the signals in the optical domain provides the benefit of handling the ultra-high data rate signals used during optical transmission in a simple and effective manner.

With reference to the first aspect, in a possible implementation the apparatus further includes an optical to electrical data converter associated with the optical neural network, which converts the final output optical signal into an electrical data signal.

With reference to the first aspect, in a possible implementation the optical to electrical data converter includes:
an optical logic gate, configured to extract the data content of the optical neural network output signal into an optical signal state; and
an optical to electrical converter associated with the optical logic gate, configured to convert the optical data state into an electrical data signal.

The optical to electrical data converter enables the continuation of signal processing in the electrical domain.

With reference to the first aspect, in a possible implementation the apparatus further includes an optical connector which couples the final output optical signal to an optical transmission medium. Thus, an optical signal which was pre-distorted by the ONN may be transmitted through the transmission medium, thereby reducing the need for equalization at the receiver end.

With reference to the first aspect, in a possible implementation at least one of the optical neurons includes a multi-mode interferometric coupler (MMIC). Using an MMIC simplifies the layout and manufacturing of the individual optical neurons and of the entire ONN.

With reference to the first aspect, in a possible implementation the phase shift controller controls the weightings by applying respective electrical signals to the phase shifters. The weightings are thus controlled in a simple manner.

With reference to the first aspect, in a possible implementation the phase shift controller includes a table of electrical signal levels to be applied to the phase shifters during operation of the apparatus. High-speed control of the phase shifters is possible, as the required weightings are known and are easily accessed with no need for additional computation or access to external elements.

With reference to the first aspect, in a possible implementation the electrical signal levels are determined during a training phase of the optical neural network. Control of the ONN is very rapid as the levels of electrical control signals are predetermined and no real-time processing to determine these levels is needed during operation.

With reference to the first aspect, in a possible implementation the apparatus further includes:
a feedback signal generator configured to generate at least one of an electrical feedback signal and an optical feedback signal from the final output optical signal; and
an electronic gate array configured to train the optical neural network based on the at least one of an electrical feedback signal and an optical feedback signal.

Including the feedback signal generator and the electronic gate array in this implementation provides an apparatus which may be used during the training phase to predetermine the levels of the control signals.

According to a second aspect of some embodiments of the present disclosure there is provided a method for training a photonic signal processor. The photonic signal processor includes:
a) an optical sampler which obtains a plurality of parallel optical samples by sampling a continuous optical signal;
b) an optical neural network associated with the optical sampler and includes interconnected optical neurons. The optical neural network is configured to optically process the parallel optical samples and to provide a final output optical signal resulting from the processing. Each of the optical neurons is configured to input optical signals and to output an optical signal comprising a weighted sum of the input optical signals, the weightings being established by phase-shifting the input optical signals prior to the summing;
c) a phase shift controller associated with the optical neural network, configured to control the phase-shifting so as to obtain required weightings for the input optical signals;
d) a feedback signal generator associated with the optical neural network, configured to generate an electrical feedback signal and/or an optical feedback signal from the final output optical signal; and
e) an electronic gate array associated with the phase shift controller, configured to train the optical neural network based on a training scheme,

The method includes:
providing a training signal to the optical sampler; and
determining required phase control signals for the phase shifters by applying the training scheme to the at least one of an electrical feedback signal and an optical feedback signal.

Thus, the control signals may be determined in an efficient manner.

With reference to the second aspect, in a possible implementation the method further includes creating a table of electrical signal levels to be applied by the phase shift controller to the phase shifters during operation of the photonic signal processor. Control of the ONN is very rapid as the levels of electrical control signals are predetermined and no real-time processing to determine these levels is needed during operation.

With reference to the second aspect, in a possible implementation the feedback signal generator includes an optical to electrical data converter associated with the optical neural network, configured to convert the final output optical signal into an electrical data signal. The optical to electrical data converter enables the continuation of signal processing in the electrical domain.

With reference to the second aspect, in a possible implementation the feedback signal generator includes an optical connector configured to couple the final output optical signal to an optical transmission medium. Thus, an optical signal which was predistorted by the ONN may be transmitted through the transmission medium, which reduces the need for equalization at the receiver end.

With reference to the first aspect or the second aspect, in a possible implementation the optical sampler includes sampling elements connected in series by respective optical delay lines. Each of the sampling elements includes:
an optical splitter configured to split the continuous optical signal into a first component signal and a second component signal;
a first and a second phase modulator associated with the optical splitter, configured to phase modulate the first component signal and the second component signal respectively; and
a multi-mode interferometric coupler associated with the phase modulators, configured to couple the phase-modulated first component signal and the phase-modulated second component signal;
wherein the phase modulators switch the continuous optical signal to a first output of the sampling element during sampling intervals of the sampling element and to a second output of the sampling element between the sampling intervals of the sampling element. The optical signal is thus sampled using simple control signals which switch the optical signal to the desired output each sampling interval.

With reference to the first aspect or the second aspect, in a possible implementation the optical neural network comprises:
a) an input layer configured to convey the parallel optical samples from the optical sampler to at least some of the optical neurons in the optical neural network;
b) at least one internal layer of optical neurons, each of the optical neurons comprising a plurality of optical inputs optically connected via respective controllable phase shifters to optical outputs of a preceding layer of the optical neural network and configured to output a sum of the phase-shifted optical output signals of the preceding layer; and
c) at least one output optical neuron, comprising a plurality of optical inputs optically connected via respective controllable phase shifters to optical outputs of a final one of the internal layers of optical neurons and configured to output a sum of the phase-shifted optical output signals of the final one of the internal layers as the final output optical signal.

This ONN structure enables extremely quick processing of the optical signal in the optical domain, with no need to convert the signal to the electrical domain before processing.

According to a third aspect of some embodiments of the present disclosure there is provided a computer program product including computer program code, which, when executed by a processor, causes the method according to the second aspect of some embodiments of the disclosure to be performed.

According to a fourth aspect of some embodiments of the present disclosure there is provided non-transitory computer-readable recording medium that stores therein a computer program product which, when executed by a processor, causes the method according to the second aspect of some embodiments of the disclosure to be performed.

Unless otherwise defined, all technical and/or scientific terms used herein have the same meaning as commonly understood by one of ordinary skill in the art to which the disclosure pertains. Although methods and materials similar or equivalent to those described herein can be used in the practice or testing of embodiments of the disclosure, exemplary methods and/or materials are described below. In case of conflict, the patent specification, including definitions, will control. In addition, the materials, methods, and examples are illustrative only and are not intended to be necessarily limiting.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

### BRIEF DESCRIPTION OF DRAWINGS

Some embodiments of the disclosure are herein described by way of example only, with reference to the accompanying drawings. With specific reference now to the drawings in detail, it is stressed that the particulars shown are by way of example and for purposes of illustrative discussion of embodiments of the disclosure. In this regard, the description taken with the drawings makes apparent to those skilled in the art how embodiments of the disclosure may be practiced.

In the drawings:
FIGS. 1A-1D are a simplified block diagrams of a photonic signal processor, according to respective embodiments of the disclosure;
FIG. 2 is a simplified block diagram of an optical sampler, according to a first exemplary embodiment of the disclosure;
FIG. 3 is a simplified block diagram of a sampling element, according to an exemplary embodiment of the disclosure;
FIGS. 4A-4B respectively show a sampled single optical pulse and a sampled sequence of optical pulses;
FIG. 5 is a simplified block diagram of an optical sampler, according to a second exemplary embodiment of the disclosure;
FIG. 6 is a simplified diagram of an optical neural network, according to an exemplary embodiment of the disclosure;
FIGS. 7A-7B are simplified diagrams of optical neurons according to respective exemplary embodiments of the disclosure;
FIG. 7C is a simplified diagram of an optical neural network with feed-forward optical neurons, according to an exemplary embodiment of the disclosure;
FIG. 8A is a simplified block diagram of an optical neuron with feedback, according to an exemplary embodiment of the disclosure; and
FIG. 8B is a simplified diagram of an ONN which includes optical neurons with feedback, according to an exemplary embodiment of the disclosure;
FIG. 9 is a simplified illustration of an optical to electrical data converter, according to an exemplary embodiment of the disclosure;
FIG. 10 is a simplified block diagram of an optical subtractor for generating an optical feedback signal, according to an embodiment of the disclosure;
FIG. 11 is a simplified block diagram of a photonic signal processor, according to an exemplary embodiment of the disclosure; and
FIG. 12 is a simplified flowchart of a method for training a photonic signal processor, according to embodiments of the disclosure.

### DESCRIPTION OF EMBODIMENTS

The present disclosure, in some embodiments thereof, relates to optical communication and, more specifically, but not exclusively, to processing optical signals.

In embodiments of the disclosure a serial optical signal is converted into parallel optical samples by an optical sampler. The optical samples are provided to an ONN which is formed from optical neurons which reflect the properties of neurons in a neural network. The optical neurons are optionally formed from optical couplers which operate based on the dynamic phenomenon of multi-mode interference coupling.

The optical neurons are connected by controllable phase shifters. Control signals are applied to the phase shifters in order to adjust the weightings of the optical signals traversing the optical distribution paths in the ONN. Electrical and/or optical feedback is used to control the distribution coefficients of the phase shifters.

In some embodiments of the disclosure the optical signals are processed by the ONN after reception, in order to recover the optical signal's original state prior transmission over the optical medium (which introduces attenuation and distortion). An optical logic gate (OLG) detects the state of the optical signal at the output of the ONN. The detected state is than converted into an electrical data signal for further processing in the electrical domain.

In alternate embodiments of the disclosure the optical signals are processed prior to transmission through the optical medium to predistort the optical signal prior to transmission through the optical transmission medium, thereby compensating for the distortion caused by the optical medium and preventing (or minimizing) the need for equalization at the reception end.

The ONN is trained to obtain fast convergence of the output so that real time operation may be achieved.

Before explaining at least one embodiment of the disclosure in detail, it is to be understood that the disclosure is not necessarily limited in its application to the details of construction and the arrangement of the components and/or methods set forth in the following description and/or illustrated in the drawings and/or the Examples. The disclosure is capable of other embodiments or of being practiced or carried out in various ways.

The present disclosure may be a system, a method, and/or a computer program product. The computer program product may include a computer readable storage medium (or media) having computer readable program instructions thereon for causing a processor to carry out aspects of the present disclosure.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

### Photonic Signal Processor (PSP)

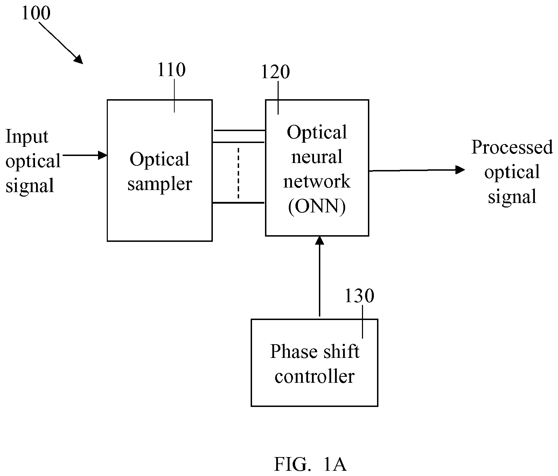

Reference is now made to FIG. 1A, which is a simplified block diagram of a photonic signal processor for optical processing of a signal, according to embodiments of the disclosure. PSP 100 includes optical sampler 110, optical neural network (ONN) 120 and phase shift controller 130.

Optical sampler 110 performs optical sampling of the input optical signal and output the samples in parallel to ONN 120.

ONN 120 optically processes the parallel optical samples and provides the final output optical signal resulting from the processing. The ONN is formed from a network of interconnecting optical neurons. Each of the optical neurons inputs multiple optical signals and outputs an optical signal which is a controllably-weighted sum of its input optical signals. The weightings are established by phase-shifting the input optical signals prior to summation. ONN 120 outputs a processed optical signal (also denoted the final output optical signal).

The processed optical signal may undergo further processing including but not limited to:
1) Optical signal state detection;
2) Conversion to electrical data signal;
3) Feedback signal generation (electrical and/or optical feedback signals);
4) Amplification; and
5) Connection to an optical transmission medium.
Embodiments of PSPs with additional optical and/or electrical processing are presented below.

The ONN may be of any type and/or structure known in the art (e.g. as appropriate for linear or for nonlinear computation).

Phase shift controller 130 controls the phase-shifting within ONN 120 in order to obtain the required weightings. Optionally, phase shift controller 130 controls the phase shifts based on electrical and/or optical feedback signals, as described in more detail below. Optionally, the phase shift controller is connected to each of the interconnection paths between the layers of optical neurons in ONN 120.

Optionally, phase shift controller 130 controls the weightings by applying respective electrical signals to the phase shifters. Further optionally, phase shift controller 130 includes a look-up table of electrical signal levels to be applied to the phase shifters during operation. The electrical signal levels may be determined during the ONN training phase.

Optionally, PSP 100 may be configured to perform multiple optical processing functions by changing the control signals for the phase shifters according to the desired function. For example, the look-up table may include a respective set of electrical signal levels for each function. In an alternate example, when the ONN is switched from one processing function to another, the signal levels in the look-up table are updated to the respective levels required to perform the new processing function.

Optionally, some or all sub-structures of PSP 100 are implemented in integrated photonics using Si-on-Insulator (SOI) Or Silicon Nitride in hybrid with an optical amplifier, the semiconductor optical amplifier being in an integrated structure. These implementations are non-limiting. Alternate implementations may use other integrated optics technologies.

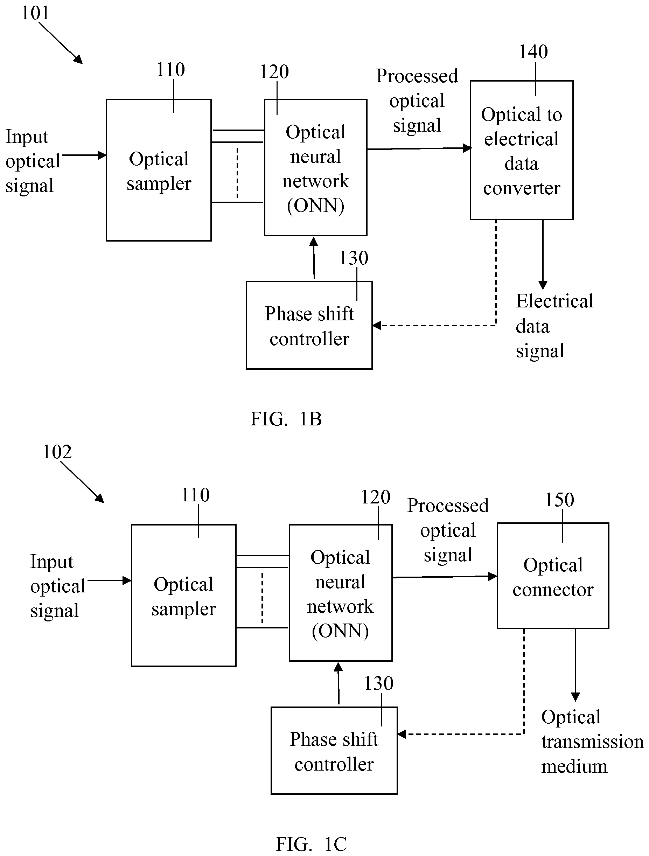

Reference is now made to FIG. 1B, which is a simplified block diagram of a photonic signal processor for optical processing of a signal in the optical domain, according to embodiments of the disclosure. In the embodiments of Fig. 1B, PSP 101 further includes optical to electrical data converter 140.

Optical to electrical data converter 140 converts the final output optical signal provided by ONN 120 into an electrical data signal. Optionally, optical to electrical data converter 140 also provides an electrical feedback signal to phase shift controller 130.

The embodiment of FIG. 1B may be suitable for a receive-side implementation of the photonic signal processor. At the input to optical sampler 110 the input optical signal is data modulated, however it has been distorted by transmission through the optical transmission medium. After processing by PSP 101 an undistorted electrical signal is obtained.

Further optionally, some optical processing (e.g. amplification) is performed at the receive side of the optical communication link before the received optical signal is provided to optical sampler 110.

Reference is now made to FIG. 1C, which is a simplified block diagram of a photonic signal processor for optical processing of a signal, according to embodiments of the disclosure. In the embodiments of Fig. 1C, PSP 102 further includes optical connector 150. Optical connector 150 connects the processed optical signal to an optical transmission medium. Further optionally, some optical processing (e.g. amplification) is performed by optical connector 150 at the transmit side of the optical communication link, before the optical signal is connected to the optical transmission medium. For example, optical connector 150 may provide an optical feedback signal to phase shift controller 130.

The embodiment of FIG. 1C may be suitable for a transmit-side implementation of the photonic signal processor. At the input to optical sampler 110 the input optical signal is already data modulated. Optical processing by PSP 102 may serve to predistort the data modulated signal prior to transmission, in order to compensate for the distortion which will be introduced by the transmission medium. Alternately or additionally, PSP 102 may perform additional modulation of the input optical signal prior to transmission.

Optionally, the phase shift controller controls the phase shifters in the ONN based on electrical and/or optical feedback signals. This feedback enables high-speed control of the phase shifters, so that ultra-fast adaptive equalization may be implemented.

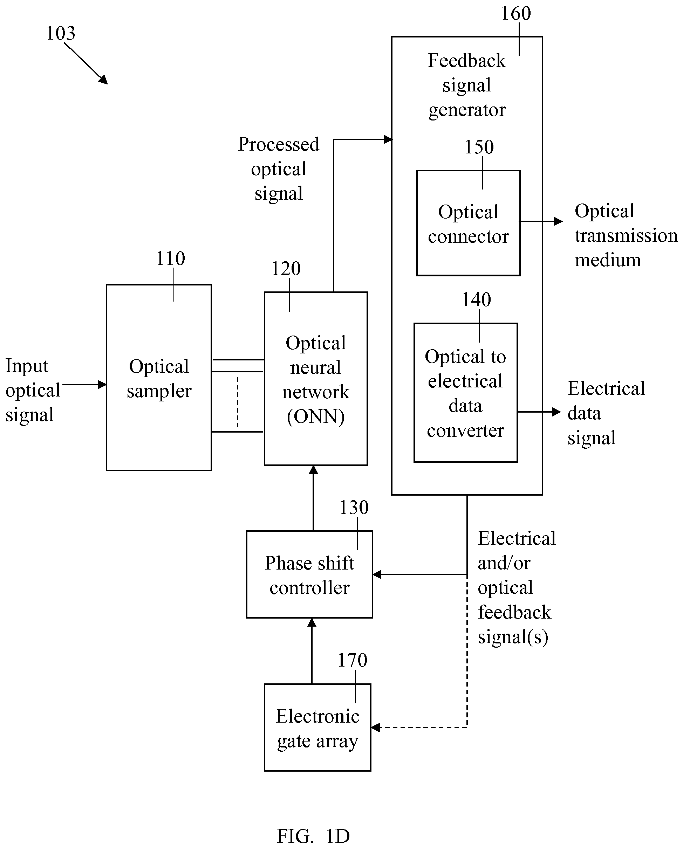

Reference is now made to FIG. 1D, which is a simplified block diagram of a photonic signal processor for optical processing of a signal, according to embodiments of the disclosure. In the embodiments of Fig. 1D, PSP 103 further includes feedback signal generator 160 and electronic gate array 170. Optionally, electronic gate array is a field programmable gate array (FPGA).

Feedback signal generator 160 generates at least one electrical feedback signal and/or at least one optical feedback signal from the processed optical signal at the output of ONN 120. ELECTRONIC GATE ARRAY 170 trains ONN 120 to attain convergence based on electrical feedback signal(s) and/or optical feedback signal(s) provided by feedback signal generator 160. Optionally, feedback signal generator 160 includes an optical connector and/or optical to electrical data converter.

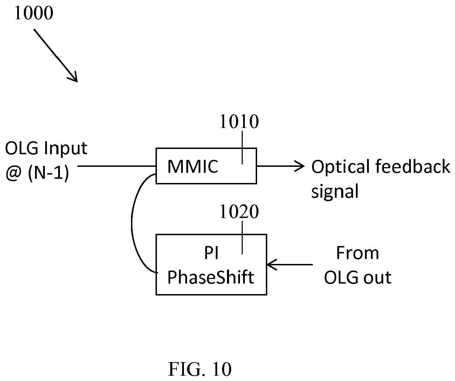

Optionally at least one electrical feedback signal is the detected electrical data signal at the output of the optical to electrical data converter. Alternately or additionally, at least one optical feedback signal is generated by an optical subtractor. An exemplary optical subtractor is described below with reference to FIG. 10.

### Optical Sampler

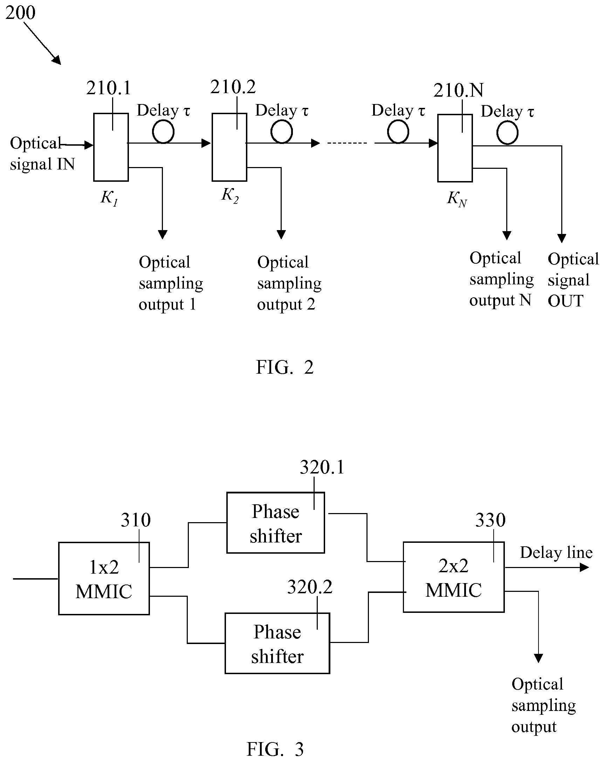

Reference is now made to FIG. 2, which is a simplified block diagram of an optical sampler, according to a first exemplary embodiment of the disclosure. Optical sampler 200 includes multiple sampling elements, 210.1-210.N, which are connected in series by respective optical delay lines.

Each of the sampling elements includes an optical splitter which splits the continuous optical signal into two component signals. The component signals are phase modulated by respective phase modulators. The phase modulated signals are provided to an MMIC, which couples the phase modulated component signals. The phase modulators switch the continuous optical signal to a sample output during its sampling intervals. Between the sampling interval the continous optical signal is switched to a second output which connects to the optical delay line.

Reference is now made to FIG. 3, which is a simplified block diagram of a sampling element according to an exemplary embodiment of the disclosure. 1x2 MMIC 310 splits the input optical signal into two components. The components pass respectively through phase shifters 320.1 and 320.2. 2x2 MMIC 330 couples the phase modulated optical signals to the sampling output or to the delay line based on the phase modulation.

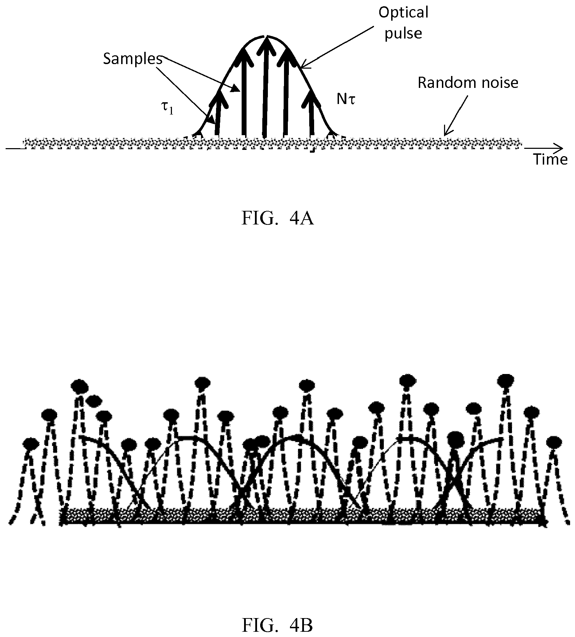

Reference is now made to FIGS. 4A and 4B which respectively show a sampled single optical pulse and a sampled sequence of optical pulses. N samples are provided in parallel at the optical sampling outputs.

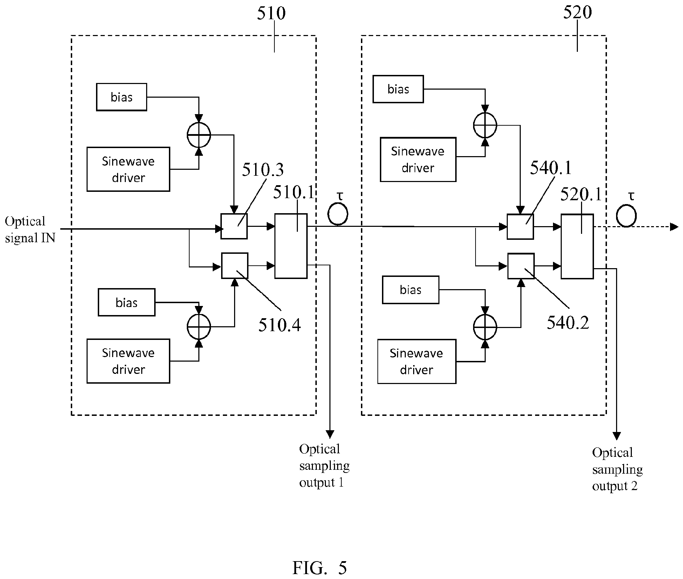

Reference is now made to FIG. 5, which is a simplified block diagram of an optical sampler, according to a second exemplary embodiment of the disclosure. Optical sampler 500 includes two sampling elements, 510 and 520, which are connected in series by an optical delay line τ.

Within each sampling element the optical signal inputs are distributed serially to an MMIC (510.1,520.1) via phase modulators (510.3, 510.4, 520.3, 520.4). Each phase modulator is biased at the initial phase using a sinewave driver. The optical delay interval τ equals the desired sampling interval (typically only a fraction of the pulse period).

The levels of phase modulation are set to switch the optical signal to the MMIC sampling output during the sampling interval and to the second MMIC output outside the sampling interval, thereby sampling the optical signal.

### Optical Neural Network

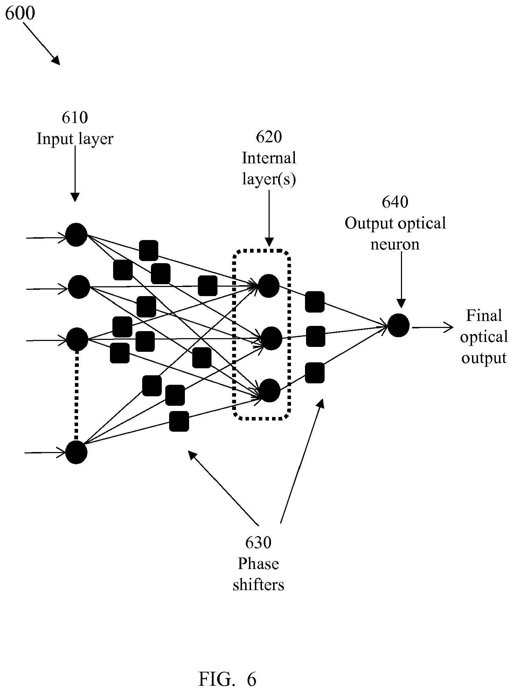

Reference is now made to FIG. 6, which is a simplified diagram of an optical neural network, according to an exemplary embodiment of the disclosure. ONN 600 includes:
a) An input layer 610 which conveys the parallel optical samples from the optical sampler to at least some of the optical neurons in the optical neural network;
b) At least one internal layer of optical neurons 620. Each optical neuron in the internal layer(s) includes optical inputs which are optically connected via controllable phase shifters 630 to optical outputs of the preceding layer of ONN 600. The optical neurons output a sum of the phase-shifted optical signals from the preceding layer; and
c) At least one output optical neuron 640 which is optically connected via controllable phase shifters to optical outputs of the final internal layer of optical neurons. The output optical neuron outputs the sum of the phase-shifted optical output signals of the final internal layers as the final output optical signal.

For clarity, FIG. 6 illustrates a non-limiting embodiment having a single internal layer of optical neurons. Alternate embodiments may contain multiple internal layers of optical neurons.

### Optical Neurons

As described above, optical neurons are the basic nodes of the ONN. Optionally, at least one of the optical neurons includes an MMIC.

As may be seen from FIG. 6, the number of inputs and outputs of the optical neurons varies according to their function and location in the ONN. For example, optical neurons in the input layer split a single input signal into multiple output signals (e.g. 1 to N). Optical neurons in the internal layer(s) input multiple signals and output multiple signals (e.g. N to N). The output optical neuron inputs multiple signals and outputs a single signal (e.g. N to 1).

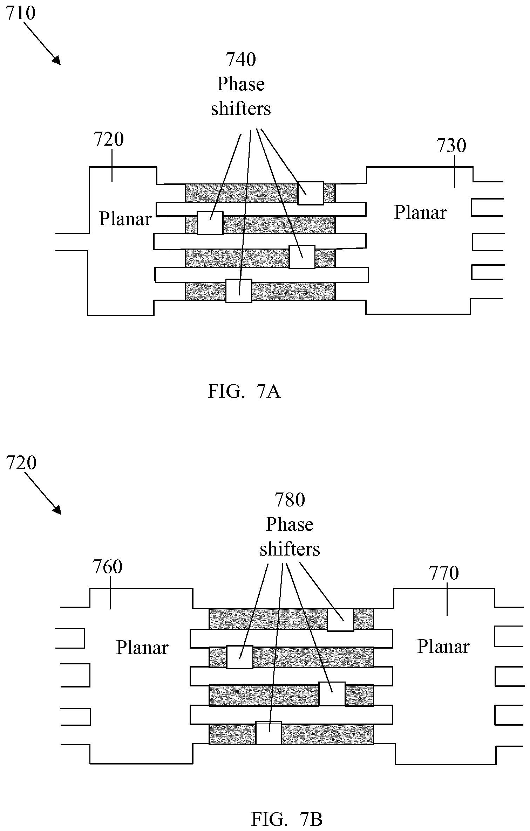

Reference is now made to FIGS. 7A-7B, which are simplified diagrams of optical neurons according to respective exemplary embodiments of the disclosure. The optical neurons employ an integrated planar optic circuit which consists of MMICs, whose number of inputs and outputs are determined by their function and location in the ONN.

FIG. 7A is a simplified illustration of a feed-forward optical neuron with a single connection on one side and multiple connections on the other side (i.e. may be used for 1 to N or for N to 1 based on the directionality of the optical signal being processed by the ONN). Optical neuron 710 includes planar portions 720 and 730. The intermediate sections include multiple optical interconnection paths which incorporate the phase shifters 740 embedded on the optical waveguide section.

FIG. 7B is a simplified illustration of a feed-forward optical neuron with multiple connections on both sides (i.e. N to N optical neuron). Optical neuron 750 includes planar portions 760 and 770. The intermediate sections include multiple optical interconnection paths which incorporate phase shifters 780 embedded on the optical waveguide section.

Any phase shift changes the distribution of the optical waves to the output points and paths at the output of the optical neuron. The weightings may be controlled by controlling the phase of the phase shifters, for example via thermo-optical effects or electro-optic effects according to the type of phase shifter.

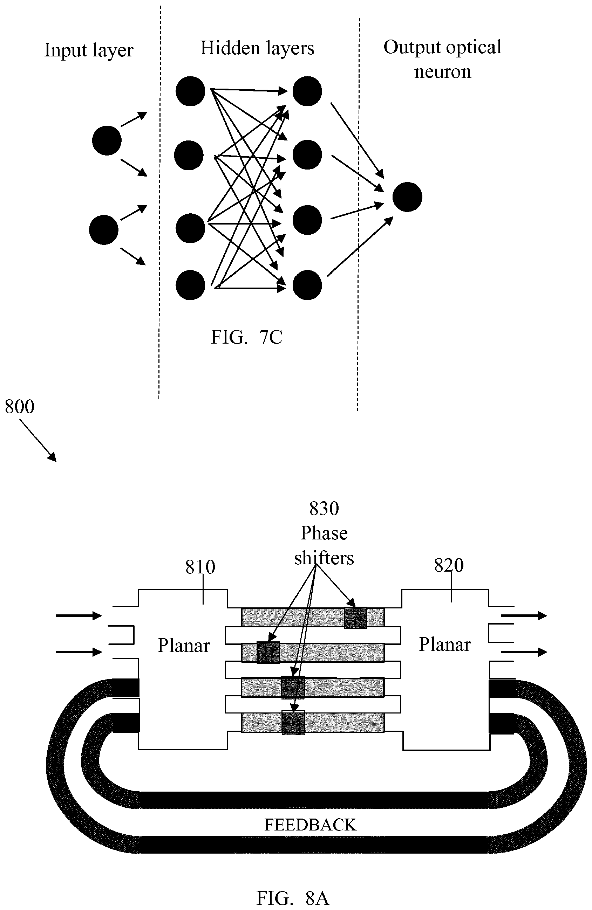

Reference is now made to FIG. 7C which is a simplified diagram of an exemplary ONN comprising feed-forward optical neurons. The optical signal are fed forward through the net, with no feedback.

Reference is now made to Fig. 8A, which is a simplified block diagram of an optical neuron with feedback, according to an exemplary embodiment of the disclosure. In optical neuron 800, both planar portions 810 820 have four inputs and four outputs. The two of the intermediate sections include phase shifters 830. Two of the outputs of 820 are fed back to inputs of 810.

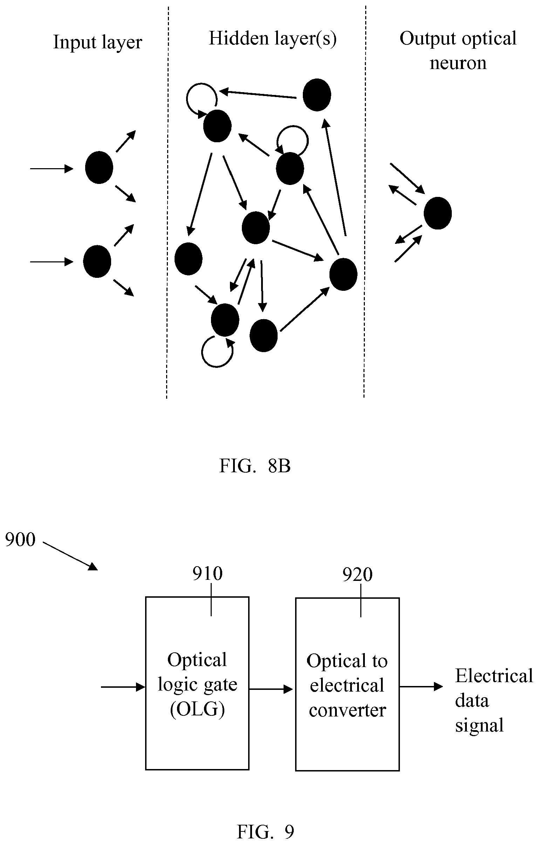

Reference is now made to FIG. 8B which is a simplified diagram of an ONN which includes optical neurons with self-feedback, according to an exemplary embodiment of the disclosure.

### Optical to Electrical Data Converter

Reference is now made to Fig. 9, which is a simplified illustration of an optical to electrical data converter, according to an exemplary embodiment of the disclosure. Optical to electrical data converter 900 includes optical logic gate (OLG) 910 and optical to electrical converter 920. OLG 910 extracts the data content of the optical neural network output signal into an optical signal state. Optical to electrical converter 920 converts the optical signal state into an electrical data signal.

### Optical Logic Gate

The optical logic gate performs a logic operation in the optical domain, in order to act as decision circutiry which determines the optical logic state or states.

Optionally, the optical logic gate includes two semiconductor optical amplifiers (SOAs) embedded in an integrated interferometer. Further optionally the interferometer is a Mach-Zehnder type interferometer (MZI) with three coupled inputs which are allocated for optical signals, control signals and an optical clocking signal.

Optionally, the optical logic gate is a SOI element, manufactured by hybrid integrated optics.

Optionally, two data signals are coupled into the MZI paths via an optical coupling region. Two control signals feed into the MZI. The first control signal acts as an ENABLE to allow the output of the MZI-SOA to operate or a clocking optical signal may be used to clock the data sequence out. If the amplitude of the optical signal at the output of the ONN is large enough to compare logically with a reference optical signal then an XOR or AND operation can be performed. This nonlinear optical logic operation is required for decision making in the optical domain.

Optionally, the optical signals are amplified by optical amplifier(s) within the optical logic gate.

Optionally, only one optical logic gate is used in the PSP. This reduces the number of nonlinear optical elements in the PSP.

### Optical Subtractor

Reference is now made to Fig. 10, which is a simplified block diagram of an optical subtractor for generating an optical feedback signal, according to an embodiment of the disclosure.

Optical subtractor 1000 includes a 2x1 MMIC 1010 and PI phase shifter 1020. The optical signal at the input of the OLG is provided to one input port of MMIC 1010. The OLG output signal is connected to the second input port of MMIC 1010 via PI phase shifter 1020 (which inverts the optical field). This creates a difference optical signal at the output of MMIC 1010.

Timing and synchronization of the optical signals are significant to achieve accurate optical feedback. If the difference optical signal is "LOW" then the output of the OLG is "NULL" in the next round and thus the decision feedback in optical domain must be at least three samples or more before the end of the symbol interval.

Optionally, the optical feedback path includes an optical neuron with feedback (see Fig. 8A) which is utilized as an optical memory.

### Exemplary Photonic Signal Processor

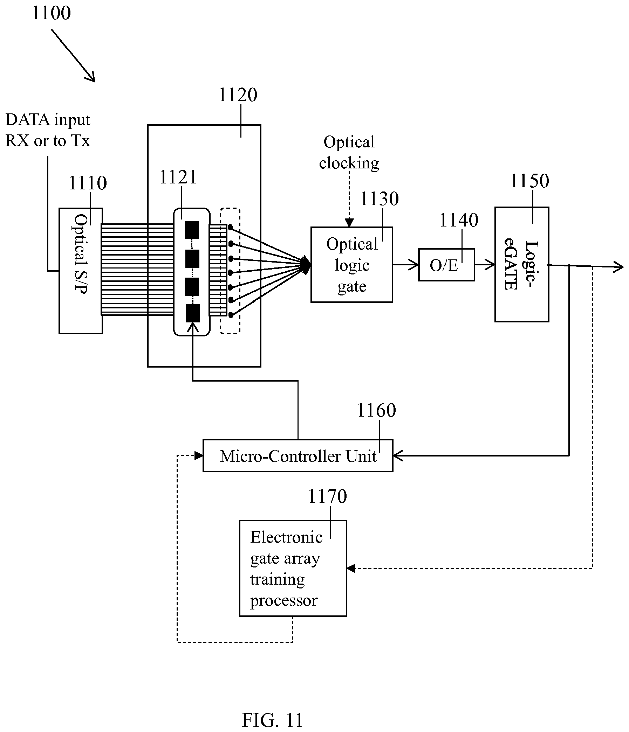

Reference is now made to FIG. 11, which is a simplified block diagram of a photonic signal processor, according to an exemplary embodiment of the disclosure.

Optical S/P 1110 is an optical sampler which converts a serial optical signal to parallel optical samples. The input to optical S/P 1110 may be a received optical signal (for recovery of the data carried by the optical signal) or an optical signal for pre-distortion prior to transmission.

The optical samples are fed into optical neural network 1120. ONN 1120 includes layers of optical neurons. The input layer is an array of optical neurons which have one optical sample input and N-outputs which connect to respective optical neurons in the ONN hidden layer.

Micro-Controller Unit (MCU) 1160 operates as a phase shift controller. Electrical control signals are provided by MCU 1160 to phase shifters 1121 in ONN 1120, in order to control the weighting coefficients of the light waves being summed by the optical neurons. The weighting coefficients are available from a look-up table.

Optionally, PSP 1100 includes electronic gate array training processor 1170. The look-up table is based on the results of a neural network training scheme which is performed by electronic gate array training processor 1170, based on the desired output of optical logic gate 1130.

The output of ONN 1120 is fed into optical logic gate 1130 in order to determine the optical logic state (e.g. "1" or "0" for non-return-to-zero signals or "00", "01", "10" or "11" for pulse-amplitude modulated signals).

Optical to electrical converter (O/E) 1140 converts the optical logic state signal into an electrical signal. Logic-eGATE 1150 extracts the data from the electrical signal (for example by comparing the output of O/E 1140 to a reference level). The data signal output by Logic-eGATE 1150 is amplified and fed back to MCU 1160, for use in generating the control signals which are used to modulate the phase shifters.

Optionally, further processing is performed on the electrical data signal output by Logic-eGATE 1150. For example, if the data carried by the transmitted optical signal was encoded prior to transmission through the optical medium a decoding algorithm performed to decode the data.

### Method for Training a Photonic Signal Processor

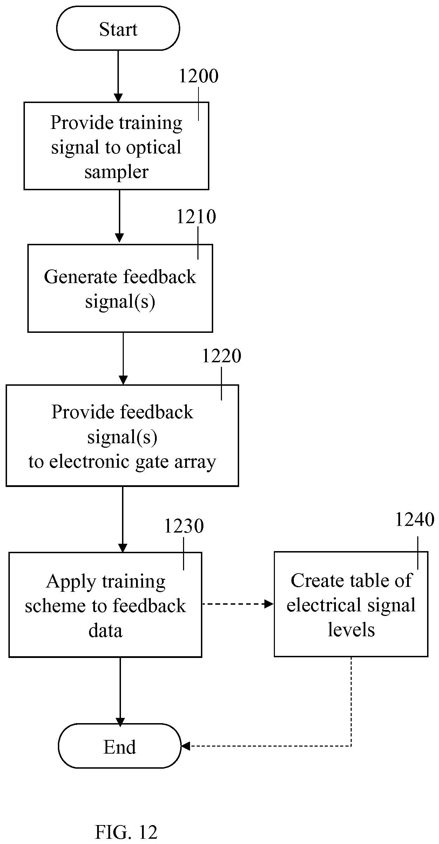

Reference is now made to FIG. 12, which is a simplified flowchart of a method for training a photonic signal processor, according to embodiments of the disclosure.

The PSP being trained includes an optical sampler, ONN, phase shift controller, feedback signal generator and electronic gate array (e.g. FPGA), according to any of the above described embodiments of the PSP and/or components of the PSP.

The electronic gate array uses optical artificial intelligence for the PSP design by running a training scheme which determines how the ONN phase shifters should be controlled during regular PSP operation.

In 1200, a training signal is provided to the optical sampler. In 1210, one or more electrical feedback signals and/or one or more optical feedback signals are generated by the feedback signal generator. In 1220, the feedback signal(s) are provided to the electronic gate array. In 1230, the required phase control signals for the phase shifters are determined by applying the training scheme to the feedback data.

Optionally, multiple training schemes are run, and each training scheme determines phase control signals for a respective processing function. This enables reconfiguration of the same ONN to perform different processing functions as described above.

Optionally, in 1230 the method further includes creating a table of electrical signal levels to be applied by the phase shift controller to the phase shifters during operation of the PSP. In an exemplary embodiment, the table is stored in the phase shift controller, for rapid access in accordance with the electrical and/or optical feedback signals during real-time operation.

Optionally, the training scheme is a close-loop control. The optical logic gate output is provided as feedback signals to the phase shift controller. The phase shift controller controls the phase shifters based on the feedback signals, resulting in an improved or worsened situation. If the situation is improved, the phase shift controller continues running until an optimized point is reached. However, if the situation is worsened, the micro-controller changes the phase shifter control signals in order to obtain a better result.

The magnitude and direction in which each phase shifter is changed is determined in accordance with at least one of a:
a) Predefined rules; and
b) Artificial intelligence deep learning.

The PSP upon which the training scheme is performed may be in accordance with any of the embodiments or combination of the embodiments described herein. Non-limiting respective embodiments of the optical sampler, ONN and optical to electrical data converter are now presented.

Optionally, the optical sampler includes multiple sampling elements which are connected in series by respective optical delay lines. Each of the sampling elements includes an optical splitter which splits the continuous optical signal into two component signals. The component signals are phase modulated by respective phase modulators. The phase modulated signals are provided to a MMIC which couples the phase modulated component signals. The phase modulators switch the continuous optical signal to a sample output during its sampling intervals. Between the sampling element's sampling interval the continuous optical signal is switched to a second output which connects to the optical delay line.

Optionally the ONN includes:
a) An input layer which conveys the parallel optical samples from the optical sampler to at least some of the optical neurons in the optical neural network;
b) At least one internal layer of optical neurons. Each optical neuron in the internal layer(s) includes optical inputs which are optically connected via controllable phase shifters to optical outputs of the preceding layer of the ONN. The optical neurons output a sum of the phase-shifted optical signals from the preceding layer; and
c) At least one output optical neuron which is optically connected via controllable phase shifters to optical outputs of the final internal layer of optical neurons. The output optical neuron outputs the sum of the phase-shifted optical output signals of the final internal layers as the final output optical signal.
Further optionally, at least one of the optical neurons includes an MMIC.

Optionally, the optical to electrical data converter includes optical OLG and an optical to electrical converter. The OLG extracts the data content of the optical neural network output signal into an optical signal state. The optical to electrical converter converts the optical signal state output by the OLG into an electrical data signal.

In summary, the embodiments presented herein enable ultra-high speed processing of optical signals in the optical domain. The low processing speeds and high resource costs involved in DSP processing of corresponding electrical signals are thus avoided.

The methods as described above are used in the fabrication of integrated circuit chips.

The flowchart and block diagrams in the Figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The descriptions of the various embodiments of the present disclosure have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant optical signals, optical transmissions, optical media, types of neural networks, neural network training schemes, optical logic gates, optical phase shifters, multi-mode interferometric couplers, electronic gate arrays, field programmable gate arrays and technologies for manufacturing optical elements will be developed and the scope of the terms optical signal, optical medium, optical neural network, training scheme, optical logic gate, phase shifter, multi-mode interferometric coupler, electronic gate array and field programmable gate array (FPGA) are intended to include all such new technologies a priori.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the disclosure may include a plurality of "optional" features unless such features conflict.

Throughout this application, various embodiments of this disclosure may be presented in a range format. It should be understood that the description in range format is merely for convenience and brevity and should not be construed as an inflexible limitation on the scope of the disclosure. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals there between.

It is appreciated that certain features of the disclosure, which are, for clarity, described in the context of separate embodiments, may also be provided in combination in a single embodiment. Conversely, various features of the disclosure, which are, for brevity, described in the context of a single embodiment, may also be provided separately or in any suitable sub-combination or as suitable in any other described embodiment of the disclosure. Certain features described in the context of various embodiments are not to be considered essential features of those embodiments, unless the embodiment is inoperative without those elements.

In addition, citation or identification of any reference in this application shall not be construed as an admission that such reference is available as prior art to the present disclosure. To the extent that section headings are used, they should not be construed as necessarily limiting.

## Claims

1. An apparatus for optical processing of a signal, comprising:
an optical sampler (110, 200, 500) configured to obtain a plurality of parallel optical samples by sampling a continuous optical signal;
an optical neural network (ONN) associated with said optical sampler (110, 200, 500) and comprising a plurality of interconnected optical neurons (710, 750, 800), said optical neural network being configured to optically process said parallel optical samples and to provide a final output optical signal resulting from said processing, each of said optical neurons (710, 750, 800) being configured to input a plurality of optical signals and to output an optical signal comprising a weighted sum of said input optical signals, said weightings being established by phase-shifting said input optical signals prior to said summing; and
a phase shift controller (130) associated with said optical neural network, configured to control said phase-shifting so as to obtain required weightings for said input optical signals.

2. An apparatus according to claim 1, further comprising at least one of:
an optical to electrical data converter (900) associated with said optical neural network, configured to convert said final output optical signal into an electrical data signal; and
an optical connector (150) configured to couple said final output optical signal to an optical transmission medium.

3. An apparatus according to claim 2, wherein said optical to electrical data converter (900) comprises:
an optical logic gate, configured to extract the data content of said optical neural network output signal into an optical signal state; and
an optical to electrical converter (920) associated with said optical logic gate, configured to convert said optical data state into an electrical data signal.

4. An apparatus according to any one of the preceding claims, wherein said optical sampler (110, 200, 500) comprises a plurality of sampling elements (510, 520) connected in series by respective optical delay lines, each of said sampling elements (510, 520) comprising:
an optical splitter configured to split said continuous optical signal into a first component signal and a second component signal;
a first and a second phase modulator associated with said optical splitter, configured to phase modulate said first component signal and said second component signal respectively; and
a multi-mode interferometric coupler (310, 330,1010) associated with said phase modulators, configured to couple said phase-modulated first component signal and said phase-modulated second component signal;
wherein said phase modulators switch said continuous optical signal to a first output of said sampling element (510, 520) during sampling intervals of said sampling element (510, 520) and to a second output of said sampling element (510, 520) between said sampling intervals of said sampling element (510, 520).

5. An apparatus according to any one of the preceding claims, wherein said optical neural network comprises:
a) an input layer (610) configured to convey said parallel optical samples from said optical sampler (110, 200, 500) to at least some of said optical neurons (710, 750, 800) in said optical neural network;
b) at least one internal layer of optical neurons (710, 750, 800), each of said optical neurons (710, 750, 800) comprising a plurality of optical inputs optically connected via respective controllable phase shifters (630) to optical outputs of a preceding layer of said optical neural network and configured to output a sum of said phase-shifted optical output signals of said preceding layer; and
c) at least one output optical neuron (640), comprising a plurality of optical inputs optically connected via respective controllable phase shifters (630) to optical outputs of a final one of said internal layers of optical neurons (710, 750, 800) and configured to output a sum of said phase-shifted optical output signals of said final one of said internal layers as said final output optical signal.

6. An apparatus according to claim 5, wherein said phase shift controller (130) is configured to control said weightings by applying respective electrical signals to said phase shifters (320, 740, 780, 830, 1121).

7. An apparatus according to any one of the preceding claims, wherein at least one of said optical neurons (710, 750, 800) comprises a multi-mode interferometric coupler (310, 330,1010).

8. An apparatus according to any one of the preceding claims, wherein said phase shift controller (130) comprises a table of electrical signal levels to be applied to said phase shifters (320, 740, 780, 830, 1121) during operation of said apparatus.

9. An apparatus according to claim 8, wherein said electrical signal levels are determined during a training phase of said optical neural network.

10. An apparatus according to any one of the preceding claims, further comprising:
a feedback signal generator configured to generate at least one of an electrical feedback signal and an optical feedback signal from said final output optical signal; and
an electronic gate array (170) configured to train said optical neural network based on said at least one of an electrical feedback signal and an optical feedback signal.

11. A method for training a photonic signal processor, comprising:
said photonic signal processor comprising:
a) an optical sampler (110, 200, 500) configured to obtain a plurality of parallel optical samples by sampling a continuous optical signal;
b) an optical neural network associated with said optical sampler (110, 200, 500) and comprising a plurality of interconnected optical neurons (710, 750, 800), said optical neural network being configured to optically process said parallel optical samples and to provide a final output optical signal resulting from said processing, each of said optical neurons (710, 750, 800) being configured to input a plurality of optical signals and to output an optical signal comprising a weighted sum of said input optical signals, said weightings being established by phase-shifting said input optical signals prior to said summing;
c) a phase shift controller (130) associated with said optical neural network, configured to control said phase-shifting so as to obtain required weightings for said input optical signals;
d) a feedback signal generator associated with said optical neural network, configured to generate at least one of an electrical feedback signal and an optical feedback signal from said final output optical signal; and
e) an electronic gate array (170) associated with said phase shift controller (130), configured to train said optical neural network based on a training scheme,
said method comprising:
providing a training signal to said optical sampler (110, 200, 500); and
determining required phase control signals for said phase shifters (320, 740, 780, 830, 1121) by applying said training scheme to said at least one of an electrical feedback signal and an optical feedback signal.

12. A method according to claim 11, further comprising creating a table of electrical signal levels to be applied by said phase shift controller (130) to said phase shifters (320, 740, 780, 830, 1121) during operation of said photonic signal processor.

13. A method according to claim 11 or claim 12, wherein said optical sampler (110, 200, 500) comprises a plurality of sampling elements (510, 520) connected in series by respective optical delay lines, each of said sampling elements (510, 520) comprising:
an optical splitter configured to split said continuous optical signal into a first component signal and a second component signal;
a first and a second phase modulator associated with said optical splitter, configured to phase modulate said first component signal and said second component signal respectively; and
a multi-mode interferometric coupler (310, 330,1010) associated with said phase modulators, configured to couple said phase-modulated first component signal and said phase-modulated second component signal;
wherein said phase modulators switch said continuous optical signal to a first output of said sampling element (510, 520) during sampling intervals of said sampling element (510, 520) and to a second output of said sampling element (510, 520) between said sampling intervals of said sampling element (510, 520).

14. A method according to any one of claims 11-13, wherein said optical neural network comprises:
a) an input layer (610) configured to convey said parallel optical samples from said optical sampler (110, 200, 500) to at least some of said optical neurons (710, 750, 800) in said optical neural network;
b) at least one internal layer of optical neurons (710, 750, 800), each of said optical neurons (710, 750, 800) comprising a plurality of optical inputs optically connected via respective controllable phase shifters (320, 740, 780, 830, 1121) to optical outputs of a preceding layer of said optical neural network and configured to output a sum of said phase-shifted optical output signals of said preceding layer; and
c) at least one output optical neuron (640), comprising a plurality of optical inputs optically connected via respective controllable phase shifters (320, 740, 780, 830, 1121) to optical outputs of a final one of said internal layers of optical neurons (710, 750, 800) and configured to output a sum of said phase-shifted optical output signals of said final one of said internal layers as said final output optical signal.

15. A method according to any one of claims 11-14, wherein said feedback signal generator comprises at least one of:
an optical to electrical data converter (900) associated with said optical neural network, configured to convert said final output optical signal into an electrical data signal; and
an optical connector (150) configured to couple said final output optical signal to an optical transmission medium.

## Patentansprüche

1. Einrichtung zur optischen Verarbeitung eines Signals, umfassend:
einen optischen Abtaster (110, 200, 500), der dafür ausgelegt ist, mehrere parallele optische Abtastungen durch Abtasten eines kontinuierlichen optischen Signals zu erhalten;
ein optisches neuronales Netz (ONN), das mit dem optischen Abtaster (110, 200, 500) verknüpft ist und mehrere miteinander verbundene optische Neuronen (710, 750, 800) umfasst, wobei das optische neuronale Netz dafür ausgelegt ist, die parallelen optischen Abtastungen optisch zu verarbeiten und ein endgültiges optisches Ausgangssignal bereitzustellen, welches sich aus der Verarbeitung ergibt, wobei jedes der optischen Neuronen (710, 750, 800) dafür ausgelegt ist, mehrere optische Signale einzugeben und
ein optisches Signal auszugeben, umfassend eine gewichtete Summe der optischen Eingangssignale, wobei die Gewichtungen durch Phasenverschiebung der optischen Eingangssignale vor dem Summieren festgelegt werden; und
eine Phasenverschiebungssteuerung (130), die mit dem optischen neuronalen Netz verknüpft ist, dafür ausgelegt, die Phasenverschiebung zu steuern, um so erforderliche Gewichtungen für die optischen Eingangssignale zu erhalten.

2. Einrichtung gemäß Anspruch 1, ferner umfassend wenigstens eines hiervon:
einen mit dem optischen neuronalen Netz verknüpften Optisch-zu-elektrisch-Datenwandler (900), der dafür ausgelegt ist, das endgültige optische Ausgangssignal in ein elektrisches Datensignal umzuwandeln; und
einen optischen Verbinder (150), der dafür ausgelegt ist, das endgültige optische Ausgangssignal an ein optisches Übertragungsmedium zu koppeln.

3. Einrichtung gemäß Anspruch 2, wobei der Optisch-zu-elektrisch-Datenwandler (900) umfasst:
ein optisches Logikgatter, das dafür ausgelegt ist, den Dateninhalt des Ausgangssignals des optischen neuronalen Netzes in einen optischen Signalzustand zu extrahieren; und
einen mit dem optischen Logikgatter verknüpften Optisch-zu-elektrisch-Wandler (920), der dafür ausgelegt ist, den optischen Datenzustand in ein elektrisches Datensignal umzuwandeln.

4. Einrichtung gemäß einem der vorstehenden Ansprüche, wobei der optische Abtaster (110, 200, 500) mehrere Abtastelemente (510, 520) umfasst, die durch jeweilige optische Verzögerungsleitungen in Reihe geschaltet sind, wobei jedes der Abtastelemente (510, 520) umfasst:
einen optischen Splitter, der dafür ausgelegt ist, das kontinuierliche optische Signal in ein erstes Komponentensignal und ein zweites Komponentensignal aufzuteilen;
einen mit dem optischen Splitter verknüpften ersten und zweiten Phasenmodulator, die dafür ausgelegt sind, das erste Komponentensignal bzw. das zweite Komponentensignal phasenzumodulieren; und
einen mit den Phasenmodulatoren verknüpften interferometrischen Mehrmodenkoppler (310, 330, 1010), der dafür ausgelegt ist, das phasenmodulierte erste Komponentensignal und das phasenmodulierte zweite Komponentensignal zu koppeln;
wobei die Phasenmodulatoren das kontinuierliche optische Signal in Abtastintervallen des Abtastelements (510, 520) auf einen ersten Ausgang des Abtastelements (510, 520) und zwischen den Abtastintervallen des Abtastelements (510, 520) auf einen zweiten Ausgang des Abtastelements (510, 520) umschalten.

5. Einrichtung gemäß einem der vorstehenden Ansprüche, wobei das optische neuronale Netz umfasst:
a) eine Eingabeschicht (610), die dafür ausgelegt ist, die parallelen optischen Abtastungen von dem optischen Abtaster (110, 200, 500) an wenigstens einige der optischen Neuronen (710, 750, 800) in dem optischen neuronalen Netz zu übermitteln;
b) wenigstens eine interne Schicht von optischen Neuronen (710, 750, 800), wobei jedes der optischen Neuronen (710, 750, 800) mehrere optische Eingänge umfasst, die optisch über jeweilige steuerbare Phasenschieber (630) mit optischen Ausgängen einer vorangehenden Schicht des optischen neuronalen Netzes verbunden sind und dafür ausgelegt sind, eine Summe der phasenverschobenen optischen Ausgangssignale der vorangehenden Schicht auszugeben; und
c) wenigstens ein optisches Ausgabeneuron (640), umfassend mehrere optische Eingänge, die optisch über jeweilige steuerbare Phasenschieber (630) mit optischen Ausgängen einer endgültigen Schicht der internen Schichten von optischen Neuronen (710, 750, 800) verbunden sind und dafür ausgelegt sind, eine Summe der phasenverschobenen optischen Ausgangssignale der endgültigen Schicht der internen Schichten als endgültiges optisches Ausgangssignal auszugeben.

6. Einrichtung gemäß Anspruch 5, wobei die Phasenverschiebungssteuerung (130) dafür ausgelegt ist, die Gewichtungen durch Anwenden jeweiliger elektrischer Signale auf die Phasenschieber (320, 740, 780, 830, 1121) zu steuern.

7. Einrichtung gemäß einem der vorstehenden Ansprüche, wobei wenigstens eines der optischen Neuronen (710, 750, 800) einen interferometrischen Mehrmodenkoppler (310, 330, 1010) umfasst.

8. Einrichtung gemäß einem der vorstehenden Ansprüche, wobei die Phasenverschiebungssteuerung (130) eine Tabelle mit elektrischen Signalpegeln umfasst, die während des Betriebs der Einrichtung auf die Phasenschieber (320, 740, 780, 830, 1121) anzuwenden sind.

9. Einrichtung gemäß Anspruch 8, wobei die elektrischen Signalpegel während einer Trainingsphase des optischen neuronalen Netzes bestimmt werden.

10. Einrichtung gemäß einem der vorstehenden Ansprüche, ferner umfassend:
einen Rückkopplungssignal-Generator, der dafür ausgelegt ist, wenigstens eines von einem elektrischen Rückkopplungssignal und einem optischen Rückkopplungssignal anhand des endgültigen optischen Ausgangssignals zu generieren; und
eine elektronische Gatteranordnung (170), die dafür ausgelegt ist, das optische neuronale Netz basierend auf dem wenigstens einen von einem elektrischen Rückkopplungssignal und einem optischen Rückkopplungssignal zu trainieren.

11. Verfahren zum Trainieren eines photonischen Signalprozessors, umfassend:
wobei der photonische Signalprozessor umfasst:
a) einen optischen Abtaster (110, 200, 500), der dafür ausgelegt ist, mehrere parallele optische Abtastungen durch Abtasten eines kontinuierlichen optischen Signals zu erhalten;
b) ein optisches neuronales Netz, das mit dem optischen Abtaster (110, 200, 500) verknüpft ist und mehrere miteinander verbundene optische Neuronen (710, 750, 800) umfasst, wobei das optische neuronale Netz dafür ausgelegt ist, die parallelen optischen Abtastungen optisch zu verarbeiten und ein endgültiges optisches Ausgangssignal bereitzustellen, welches sich aus der Verarbeitung ergibt, wobei jedes der optischen Neuronen (710, 750, 800) dafür ausgelegt ist, mehrere optische Signale einzugeben und ein optisches Signal auszugeben, umfassend eine gewichtete Summe der optischen Eingangssignale, wobei die Gewichtungen durch Phasenverschiebung der optischen Eingangssignale vor dem Summieren festgelegt werden;
c) eine Phasenverschiebungssteuerung (130), die mit dem optischen neuronalen Netz verknüpft ist, dafür ausgelegt, die Phasenverschiebung zu steuern, um so erforderliche Gewichtungen für die optischen Eingangssignale zu erhalten;
d) einen Rückkopplungssignal-Generator, der mit dem optischen neuronalen Netz verknüpft ist, dafür ausgelegt, wenigstens eines von einem elektrischen Rückkopplungssignal und einem optischen Rückkopplungssignal anhand des endgültigen optischen Ausgangssignals zu generieren; und
e) eine elektronische Gatteranordnung (170), die mit der Phasenverschiebungssteuerung (130) verknüpft ist, dafür ausgelegt, das optische neuronale Netz basierend auf einem Trainingsschema zu trainieren,
wobei das Verfahren umfasst:
Bereitstellen eines Trainingssignals für den optischen Abtaster (110, 200, 500); und
Bestimmen erforderlicher Phasensteuerungssignale für die Phasenverschieber (320, 740, 780, 830, 1121) durch Anwenden des Trainingsschemas auf wenigstens eines von einem elektrischen Rückkopplungssignal und einem optischen Rückkopplungssignal.

12. Verfahren gemäß Anspruch 11, ferner umfassend das Erstellen einer Tabelle mit elektrischen Signalpegeln, die von der Phasenverschiebungssteuerung (130) während des Betriebs des photonischen Signalprozessors auf die Phasenverschieber (320, 740, 780, 830, 1121) anzuwenden sind.

13. Verfahren gemäß Anspruch 11 oder Anspruch 12, wobei der optische Abtaster (110, 200, 500) mehrere Abtastelemente (510, 520) umfasst, die durch jeweilige optische Verzögerungsleitungen in Reihe geschaltet sind, wobei jedes der Abtastelemente (510, 520) umfasst:
einen optischen Splitter, der dafür ausgelegt ist, das kontinuierliche optische Signal in ein erstes Komponentensignal und ein zweites Komponentensignal aufzuteilen;
einen mit dem optischen Splitter verknüpften ersten und zweiten Phasenmodulator, die dafür ausgelegt sind, das erste Komponentensignal bzw. das zweite Komponentensignal phasenzumodulieren; und
einen mit den Phasenmodulatoren verknüpften interferometrischen Mehrmodenkoppler (310, 330, 1010), der dafür ausgelegt ist, das phasenmodulierte erste Komponentensignal und das phasenmodulierte zweite Komponentensignal zu koppeln;
wobei die Phasenmodulatoren das kontinuierliche optische Signal in Abtastintervallen des Abtastelements (510, 520) auf einen ersten Ausgang des Abtastelements (510, 520) und zwischen den Abtastintervallen des Abtastelements (510, 520) auf einen zweiten Ausgang des Abtastelements (510, 520) umschalten.

14. Verfahren gemäß einem der Ansprüche 11-13, wobei das optische neuronale Netz umfasst:
a) eine Eingabeschicht (610), die dafür ausgelegt ist, die parallelen optischen Abtastungen von dem optischen Abtaster (110, 200, 500) an wenigstens einige der optischen Neuronen (710, 750, 800) in dem optischen neuronalen Netz zu übermitteln;
b) wenigstens eine interne Schicht von optischen Neuronen (710, 750, 800), wobei jedes der optischen Neuronen (710, 750, 800) mehrere optische Eingänge umfasst, die optisch über jeweilige steuerbare Phasenschieber (320, 740, 780, 830, 1121) mit optischen Ausgängen einer vorangehenden Schicht des optischen neuronalen Netzes verbunden sind und dafür ausgelegt sind, eine Summe der phasenverschobenen optischen Ausgangssignale der vorangehenden Schicht auszugeben; und
c) wenigstens ein optisches Ausgabeneuron (640), umfassend mehrere optische Eingänge, die optisch über jeweilige steuerbare Phasenschieber (320, 740, 780, 830, 1121) mit optischen Ausgängen einer endgültigen Schicht der internen Schichten von optischen Neuronen (710, 750, 800) verbunden sind und dafür ausgelegt sind, eine Summe der phasenverschobenen optischen Ausgangssignale der endgültigen Schicht der internen Schichten als endgültiges optisches Ausgangssignal auszugeben.

15. Verfahren gemäß einem der Ansprüche 11-14, wobei der Rückkopplungssignal-Generator wenigstens eines hiervon umfasst:
einen mit dem optischen neuronalen Netz verknüpften Optisch-zu-elektrisch-Datenwandler (900), der dafür ausgelegt ist, das endgültige optische Ausgangssignal in ein elektrisches Datensignal umzuwandeln; und
einen optischen Verbinder (150), der dafür ausgelegt ist, das endgültige optische Ausgangssignal an ein optisches Übertragungsmedium zu koppeln.

## Revendications

1. Appareil de traitement optique d'un signal, comprenant :
un échantillonneur optique (110, 200, 500) configuré pour obtenir une pluralité d'échantillons optiques parallèles en échantillonnant un signal optique continu ;
un réseau neuronal optique (ONN) associé audit échantillonneur optique (110, 200, 500) et comprenant une pluralité de neurones optiques interconnectés (710, 750, 800), ledit réseau neuronal optique étant configuré pour traiter optiquement lesdits échantillons optiques parallèles et pour fournir un signal optique de sortie final résultant dudit traitement, chacun desdits neurones optiques (710, 750, 800) étant configuré pour entrer une pluralité de signaux optiques et pour délivrer un signal optique comprenant une somme pondérée desdits signaux optiques d'entrée, lesdites pondérations étant établies en déphasant lesdits signaux optiques d'entrée avant ladite sommation ; et
un dispositif de commande de déphasage (130) associé audit réseau neuronal optique, configuré pour commander ledit déphasage de manière à obtenir des pondérations requises pour lesdits signaux optiques d'entrée.

2. Appareil selon la revendication 1, comprenant en outre au moins un parmi :
un convertisseur de données optique-électrique (900) associé audit réseau neuronal optique, configuré pour convertir ledit signal optique de sortie final en un signal de données électrique ; et
un connecteur optique (150) configuré pour coupler ledit signal optique de sortie final à un support de transmission optique.

3. Appareil selon la revendication 2, dans lequel ledit convertisseur de données optique-électrique (900) comprend :
une porte logique optique, configurée pour extraire le contenu de données dudit signal de sortie de réseau neuronal optique en un état de signal optique ; et
un convertisseur optique-électrique (920) associé à ladite porte logique optique, configuré pour convertir ledit état de données optiques en un signal de données électrique.

4. Appareil selon l'une quelconque des revendications précédentes, dans lequel ledit échantillonneur optique (110, 200, 500) comprend une pluralité d'éléments d'échantillonnage (510, 520) connectés en série par des lignes à retard optique respectives, chacun desdits éléments d'échantillonnage (510, 520) comprenant :
un diviseur optique configuré pour diviser ledit signal optique continu en un premier signal de composante et un deuxième signal de composante ;
un premier et un deuxième modulateur de phase associés audit diviseur optique, configurés pour moduler en phase ledit premier signal de composante et ledit deuxième signal de composante respectivement ; et
un coupleur interférométrique multimode (310, 330, 1010) associé auxdits modulateurs de phase, configuré pour coupler ledit premier signal de composante modulé en phase et ledit deuxième signal de composante modulé en phase ;
dans lequel lesdits modulateurs de phase commutent ledit signal optique continu sur une première sortie dudit élément d'échantillonnage (510, 520) pendant des intervalles d'échantillonnage dudit élément d'échantillonnage (510, 520) et sur une deuxième sortie dudit élément d'échantillonnage (510, 520) entre ledit intervalles d'échantillonnage dudit élément d'échantillonnage (510, 520).

5. Appareil selon l'une quelconque des revendications précédentes, dans lequel ledit réseau neuronal optique comprend :
a) une couche d'entrée (610) configurée pour transporter lesdits échantillons optiques parallèles dudit échantillonneur optique (110, 200, 500) vers au moins certains desdits neurones optiques (710, 750, 800) dans ledit réseau neuronal optique ;
b) au moins une couche interne de neurones optiques (710, 750, 800), chacun desdits neurones optiques (710, 750, 800) comprenant une pluralité d'entrées optiques connectées optiquement via des déphaseurs commandables respectifs (630) à des sorties optiques d'une couche précédente dudit réseau neuronal optique et étant configuré pour délivrer une somme desdits signaux de sortie optiques déphasés de ladite couche précédente ; et
c) au moins un neurone optique de sortie (640), comprenant une pluralité d'entrées optiques connectées optiquement via des déphaseurs commandables respectifs (630) à des sorties optiques d'une dernière desdites couches internes de neurones optiques (710, 750, 800) et étant configuré pour délivrer une somme desdits signaux de sortie optiques déphasés de ladite dernière desdites couches internes en tant que ledit signal optique de sortie final.

6. Appareil selon la revendication 5, dans lequel ledit dispositif de commande de déphasage (130) est configuré pour commander lesdites pondérations en appliquant des signaux électriques respectifs auxdits déphaseurs (320, 740, 780, 830, 1121).

7. Appareil selon l'une quelconque des revendications précédentes, dans lequel au moins un desdits neurones optiques (710, 750, 800) comprend un coupleur interférométrique multimode (310, 330, 1010).

8. Appareil selon l'une quelconque des revendications précédentes, dans lequel ledit dispositif de commande de déphasage (130) comprend une table de niveaux de signaux électriques à appliquer auxdits déphaseurs (320, 740, 780, 830, 1121) pendant le fonctionnement dudit appareil.

9. Appareil selon la revendication 8, dans lequel lesdits niveaux de signal électrique sont déterminés pendant une phase d'apprentissage dudit réseau neuronal optique.

10. Appareil selon l'une quelconque des revendications précédentes, comprenant en outre :
un générateur de signal de rétroaction configuré pour générer au moins un parmi un signal de rétroaction électrique et un signal de rétroaction optique à partir dudit signal optique de sortie final ; et
un réseau de portes électroniques (170) configuré pour opérer un apprentissage dudit réseau neuronal optique sur la base dudit au moins un parmi un signal de rétroaction électrique et un signal de rétroaction optique.

11. Procédé d'apprentissage d'un processeur de signal photonique, comprenant :
ledit processeur de signal photonique, comprenant :
a) un échantillonneur optique (110, 200, 500) configuré pour obtenir une pluralité d'échantillons optiques parallèles en échantillonnant un signal optique continu ;
b) un réseau neuronal optique associé audit échantillonneur optique (110, 200, 500) et comprenant une pluralité de neurones optiques interconnectés (710, 750, 800), ledit réseau neuronal optique étant configuré pour traiter optiquement lesdits échantillons optiques parallèles et pour fournir un signal optique de sortie final résultant dudit traitement, chacun desdits neurones optiques (710, 750, 800) étant configuré pour entrer une pluralité de signaux optiques et pour délivrer un signal optique comprenant une somme pondérée desdits signaux optiques d'entrée, lesdites pondérations étant établies en déphasant lesdits signaux optiques d'entrée avant ladite sommation ;
c) un dispositif de commande de déphasage (130) associé audit réseau neuronal optique, configuré pour commander ledit déphasage de manière à obtenir des pondérations requises pour lesdits signaux optiques d'entrée ;
d) un générateur de signal de rétroaction associé audit réseau neuronal optique, configuré pour générer au moins un parmi un signal de rétroaction électrique et un signal de rétroaction optique à partir dudit signal optique de sortie final ; et
e) un réseau de portes électroniques (170) associé audit dispositif de commande de déphasage (130), configuré pour opérer un apprentissage dudit réseau neuronal optique sur la base d'un schéma d'apprentissage,
ledit procédé comprenant :
la fourniture d'un signal d'apprentissage audit échantillonneur optique (110, 200, 500) ; et
la détermination de signaux de commande de phase requis pour lesdits déphaseurs (320, 740, 780, 830, 1121) en appliquant ledit schéma d'apprentissage audit au moins un parmi un signal de rétroaction électrique et un signal de rétroaction optique.

12. Procédé selon la revendication 11, comprenant en outre la création d'une table de niveaux de signal électrique à appliquer par ledit dispositif de commande de déphasage (130) auxdits déphaseurs (320, 740, 780, 830, 1121) pendant le fonctionnement dudit processeur de signal photonique.

13. Procédé selon la revendication 11 ou la revendication 12, dans lequel ledit échantillonneur optique (110, 200, 500) comprend une pluralité d'éléments d'échantillonnage (510, 520) connectés en série par des lignes à retard optique respectives, chacun desdits éléments d'échantillonnage (510, 520) comprenant :
un diviseur optique configuré pour diviser ledit signal optique continu en un premier signal de composante et un deuxième signal de composante ;
un premier et un deuxième modulateur de phase associés audit diviseur optique, configurés pour moduler en phase ledit premier signal de composante et ledit deuxième signal de composante respectivement ; et
un coupleur interférométrique multimode (310, 330, 1010) associé auxdits modulateurs de phase, configuré pour coupler ledit premier signal de composante modulé en phase et ledit deuxième signal de composante modulé en phase ;
dans lequel lesdits modulateurs de phase commutent ledit signal optique continu sur une première sortie dudit élément d'échantillonnage (510, 520) pendant des intervalles d'échantillonnage dudit élément d'échantillonnage (510, 520) et sur une deuxième sortie dudit élément d'échantillonnage (510, 520) entre lesdits intervalles d'échantillonnage dudit élément d'échantillonnage (510, 520).

14. Procédé selon l'une quelconque des revendications 11 à 13, dans lequel ledit réseau neuronal optique comprend :
a) une couche d'entrée (610) configurée pour transporter lesdits échantillons optiques parallèles dudit échantillonneur optique (110, 200, 500) vers au moins certains desdits neurones optiques (710, 750, 800) dans ledit réseau neuronal optique ;
b) au moins une couche interne de neurones optiques (710, 750, 800), chacun desdits neurones optiques (710, 750, 800) comprenant une pluralité d'entrées optiques connectées optiquement via des déphaseurs commandables respectifs (320, 740, 780, 830, 1121) à des sorties optiques d'une couche précédente dudit réseau neuronal optique et étant configuré pour délivrer une somme desdits signaux de sortie optiques déphasés de ladite couche précédente ; et
c) au moins un neurone optique de sortie (640), comprenant une pluralité d'entrées optiques connectées optiquement via des déphaseurs commandables respectifs (320, 740, 780, 830, 1121) aux sorties optiques d'une dernière desdites couches internes de neurones optiques (710, 750, 800) et étant configuré pour délivrer une somme desdits signaux de sortie optiques déphasés de ladite dernière desdites couches internes en tant que ledit signal optique de sortie final.

15. Procédé selon l'une quelconque des revendications 11 à 14, dans lequel ledit générateur de signal de rétroaction comprend au moins un parmi :
un convertisseur de données optique-électrique (900) associé audit réseau neuronal optique, configuré pour convertir ledit signal optique de sortie final en un signal de données électrique ; et
un connecteur optique (150) configuré pour coupler ledit signal optique de sortie final à un support de transmission optique.
